# EUROPEAN PATENT SPECIFICATION

(11) **EP 0 263 635 B1**
(45) Date of publication and mention of the grant of the patent: **10.11.1993**
(21) Application number: 87308633.4
(22) Date of filing: 29.09.1987
(51) Int. Cl.: H04M 9/00

(54) **Apparatus for effecting market research with the aid of two-directional communication**
Apparat zur Durchführung von Marktforschung mit Hilfe von Zweiwegkommunikation
Appareil pour effectuer une étude de marché à l'aide d'une communication bidirectionnelle

(30) Priority: 01.10.1986 JP 233950/86
(43) Date of publication of application: 13.04.1988
(73) Proprietor: IKEGAMI TSUSHINKI CO., LTD., Ohta-ku Tokyo 146 (JP); VIDEO RESEARCH LTD, Tokyo 104 (JP)
(72) Inventor: Wake, Shunji c/o Ikegami Tsushinki Co. Ltd., Kawasaki City Kanagawa Pref. (JP); Itoh, Yoshikazu c/o Video Research Ltd., Tokyo (JP)
(74) Representative: Palmer, Roger

(56) References cited:
- EP-A- 0 275 328
- GB-A- 2 027 298

## Description

This invention relates generally to a technique for collecting market research data with the aid of bidirectional or two-way communication, and more particularly to a system for collecting market research data and television channel data in the bidirectional communication mode over a telephone type links.

Heretofore, the market research data has been generally collected in a manual way which utilizes research booklets or questionnaires, and in an automatic manner in which research data is picked-up electronically. In the former manual method, the distribution and collection of booklets are effected by clerks or by mails. This method has a merit that object and range of survey can be selected and changed at will, but also has demerits that the delivery and collection of booklets require a lot of time and labor work and that error might be introduced in collecting data written on the booklets.

In the automatic market research data collection system in which data is picked-up with the aid of electric means, terminal devices are provided in respective panelist homes and research data is entered by panelists with the aid of the terminal devices. Then, the data is sent to a data center and the transmitted data is analyzed by means of a computer to derive various kinds of statistical data. Such an electronic research data collecting system has been disclosed in U.S. Patents Nos. 4,355,372 issued to Johnson et al on October 19, 1982, 4,546,382 issued to McKenn et al on October 8, 1985, 4,566,030 issued to Nickerson et al on January 21, 1986, 4,630,108 issued to Gomersal on December 16, 1986 and 4,644,393 issued to Smith et al on February 17, 1987.

In the known apparatuses for collecting television channel data and/or market research data, it is usual that bar codes provided on products purchased by a panelist are readout by a bar-code reader, and data such as the number of products and prices are entered by operating a keyboard. In this case in order to avoid erroneous data entry, input method, caution, confirmation, etc. are displayed on a display device so that data can be entered in a correct order. The data thus entered is once stored in a magnetic tape or floppy disc, and thereafter the tape or disc is collected by clerks or mailed to the research data center. It is also known to send the entered data to the data center over telephone type links. This data collection system has a merit that the time for research can be remarkably shortened.

As the television channel data collection system, there have been proposed various systems. For instance, in a Japanese Patent Laid-open Publication (Kokai) No. 54-80,617, there is disclosed a system for measuring television audience ratings for respective channels, and in a Japanese Patent Laid-open Publication (Kokai) No. 54-80,610, there is described a method for transmitting television channel data through domestic power supply lines.

In POS (Point of Sales Type) System, at respective branches of a large scale supermarket, data of sold products is read or entered by bar-code readers and keyboards and is sent to a data center on a real time mode. At the data center the received data is processed and analyzed by a computer to grasp actual results of sellings and to derive data for use in management of stocks of products.

There have been further developed various information communication systems utilizing the bidirectional communication. For instance, in CAPTAIN (Character And Pattern Telephone Access Information Network) system, the bidirectional communication is carried out over telephone links, and in CATV (Cable Television) system and VRS (Video Response System) the bidirectional communication is performed over coaxial cables. Generally in INS (Information Network System), various kinds of data can be obtained with the aid of the bidirectional communication. In almost all systems, messages sent from user terminals to the data center are usually commands for selecting desired kind of various services.

The market research data collecting system utilizing telephone links has advantages that the time and labor work for survey can be saved and the useful data can be obtained within a very short time period. Further when such a market research data collecting system is combined with the television channel data collecting system, the effectiveness of survey could be further increased.

In the known market research data and television channel data collecting system, the manner of operating terminal devices and the method of entering data are taught by means of the explanation of service men, instruction manuals and code tables. However, the manner of operation is rather complicated and thus erroneous operation might occur. Particularly, even if it is desired to change a portion of operating manner, it is rather difficult to effect the change easily and smoothly. Further, complicated research and various kinds of research could not be conducted. Further, though contents of questions may be displayed on the television screen, if the panelists do not watch the televisions at that time, answers to questions could not be obtained. Moreover, in order to build up an effective survey system and to effect the survey, it is absolutely necessary to have the cooperation of panelists, but it is rather difficult to get the admission of the panelists that the terminals for survey are installed in their houses even if money is paid for the cooperation.

The primary object of the present invention is to provide a market research data collecting apparatus in which various kinds of information such as the operation of terminals, manner of effecting the market research and questions, are directly informed to panelists with the aid of a two-way communication so that the panelists could understand these information and any trouble due to erroneous operation can be effectively eliminated and contents of survey could be improved.

It is a second object of the invention to provide a market research data collecting apparatus in which a data center can call respective panelists and an answer-to-question can be effected in an interactive manner, so that the answer ratings can be increased and the grade of questionnaire contents can be made high.

It is a third object of the invention to provide a market research data collecting apparatus in which a data center processes market research data collected thereat to derive housekeeping account data for respective panelists and sends the thus derived data to panelists as auxiliary housekeeping account data, so that the admission of respective panelists for installing terminals at their homes can be easily obtained.

A fourth object of the invention is to provide a market research data collecting apparatus in which a data center sends commercial information to respective panelists and questionnaires about the commercial information is collected in a prompt manner, substantially in a real time mode.

It is a fifth object of the invention to provide a market research data collecting apparatus in which both market research data and television audience rating data can be collected, so that more effective market survey including effectiveness of commercials and habits of television viewers can be carried out.

According to the invention an apparatus for detecting market research data from television viewers with the aid of a two-way communication comprises at respective panelist homes
a first data entry means for entering data about products purchased by panelists;
a second data entry means for entering questionnaire data including answers of panelists to questions;
a data processing means for receiving the market research data and questionnaire data entered by said first and second data entry means, processing the received data into a transmission data having a predetermined format, storing the transmission data and transmitting the transmission data to a data center over a telephone type link; and
a means for receiving messages sent from the data center and outputting the messages;
and at the data center
a means for controlling said data processing means at the panelist homes and collecting the transmission data stored therein;
a means for processing the transmission data collected from the panelist homes to derive marketing research data including market research data, effectiveness of commercials, and answers to questions; and a means for transmitting the messages to the panelist homes.

The invention will now be described in detail with reference to the accompanying drawings, wherein:
Fig. 1 is a block diagram showing an embodiment of the apparatus according to the invention for collecting both the market research data and television audience rating data;
Fig. 2 is a block diagram illustrating a channel detector shown in Fig. 1:
Fig. 3 is a schematic view depicting the channel data formation;
Fig. 4 is a block diagram showing a questionnaire transmitter of Fig. 1;
Figs. 5A and 5B are front and plan views, respectively illustrating an outer appearance of the questionnaire transmitter;
Fig. 6 is a block diagram showing a questionnaire receiver of Fig. 1;
Figs. 7A and 7B are plan and front views, respectively of the questionnaire receiver;
Fig. 8 is a block diagram representing a market research data entry device of Fig. 1;
Figs. 9A and 9B are plan and front views, respectively of the data entry device shown in Fig. 8;
Figs. 10A and 10B are side and front views, respectively of a bar-code reader;
Fig. 11 is a block diagram illustrating a personal television audience rating data entry device;
Fig. 12 is a front view depicting a display device of the data entry device of Fig. 11;
Fig. 13 is a schematic view showing an example of a display screen of the display device of Fig. 12;
Fig. 14 is a block diagram showing a data processing device of Fig. 1;
Fig. 15 is a format of a channel data; and
Fig. 16 is a format of a first column of transmitted data.

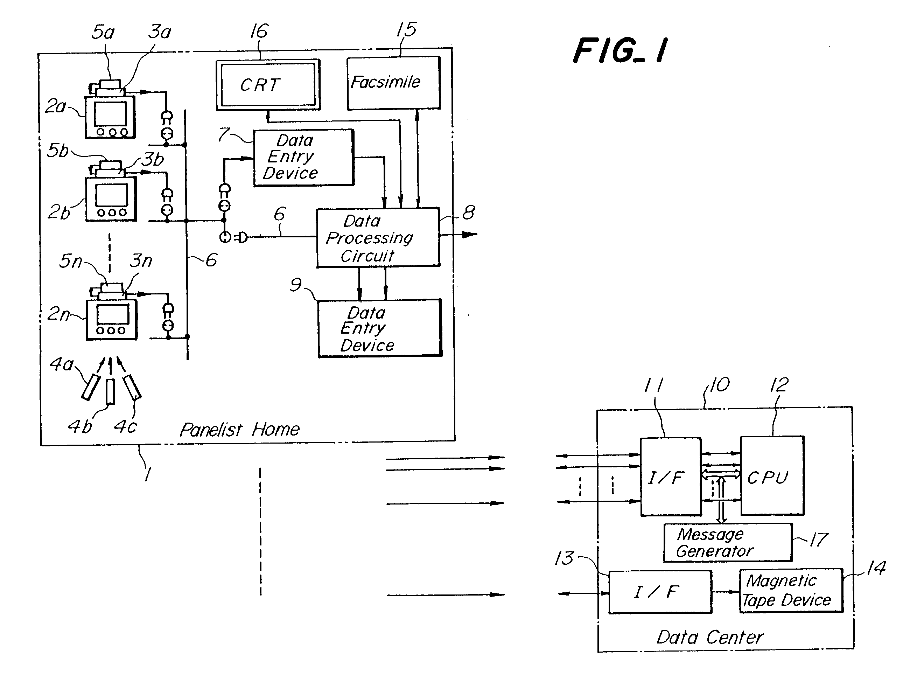

Fig. 1 is a block diagram showing an embodiment of the market research data collecting apparatus according to the invention. In the present embodiment, the collection of data concerning both the market research and television audience rating can be carried out with the aid of the bidirectional communication over telephone type links. In Fig. 1, a reference numeral 1 denotes a panelist home and a reference numeral 10 represents a data center. In the panelist home 1, there are arranged channel detectors 3a, 3b ^{...} besides television receiver sets 2a, 2b ^{...}, respectively to detect television channels being viewed. The detected channel data is transmitted to a data processing device 8 via domestic power supply lines 6. There is further provided a market research data entry device 7 which includes a bar-code reader and a keyboard for entering various kinds of data of products purchased by panelists. The entered data is transmitted to the data processing device 8. In the panelist home 1 there are further provided questionnaire transmitters 4a, 4b ^{...} for transmitting answers to questions by means of infrared radiations. By pressing keys provided on transmitters while watching questions displayed on the television receiver screens, answers of panelists can be transmitted to questionnaire receivers 5a, 5b ^{...}. It should be noted that the data may be transmitted with the aid of ultrasonic waves or weak electromagnetic waves. The questionnaire receivers 5a, 5b ^{...} are preferably placed on the channel detectors 3a, 3b ^{...}, respectively. The data received by the questionnaire receivers 5a, 5b ^{...} are supplied to the channel detectors 3a, 3b ^{...}, and then are transmitted to the data processing device 8 together with the channel data. There is further provided a personal television audience rating data entry device 9 which receives the channel data from the data processing device 8 and displays the channel data on a display together with a time scale. Then each panelist can enter viewing times and evaluation for programs being viewed by means of a touch-pen. The viewing times and evaluation data thus entered are supplied to the data processing device 8. There are further arranged a device 15 for forming hard copies and a CRT display device 16. In the present embodiment, since the pattern transmission is utilized, the hard copy forming device 15 may be constituted by a simple facsimile device. The data processing device 8 can identify various kinds of data supplied from the channel detectors 3a, 3b ^{...}, personal audience rating data entry device 9, market research data entry device 7 and questionnaire transmitters 4a, 4b ^{...}, and converts these kinds of data into transmission data having a given format which is then stored. When messages are transmitted from the data center 10, they are displayed on the CRT display device 16 and hard copies are formed. If the messages include a speech message, it is reproduced by loudspeakers. The terminal at the panelist home 1 is connected to a telephone type link.

The data center 10 comprises computer 12, interface 11 and message generating device 17. The computer 12 controls the data processing devices 8 provided in respective panelist home terminals 1 and causes them to send the transmission data stored therein to the data center 10 in a given order. Then the computer 12 calculates television audience ratings for respective channels and various kinds of marketing research information from the reviewed data. As a case may be, the computer 12 causes the message generating device 17 to send messages to respective panelist home terminals 1. The data center 10 further comprises a magnetic tape device 14 and its interface 13 which serve as a back-up for the computer 12. A plurality of telephone lines are connected to the data center 10 so that it can handle a plurality of the terminals 1 simultaneously.

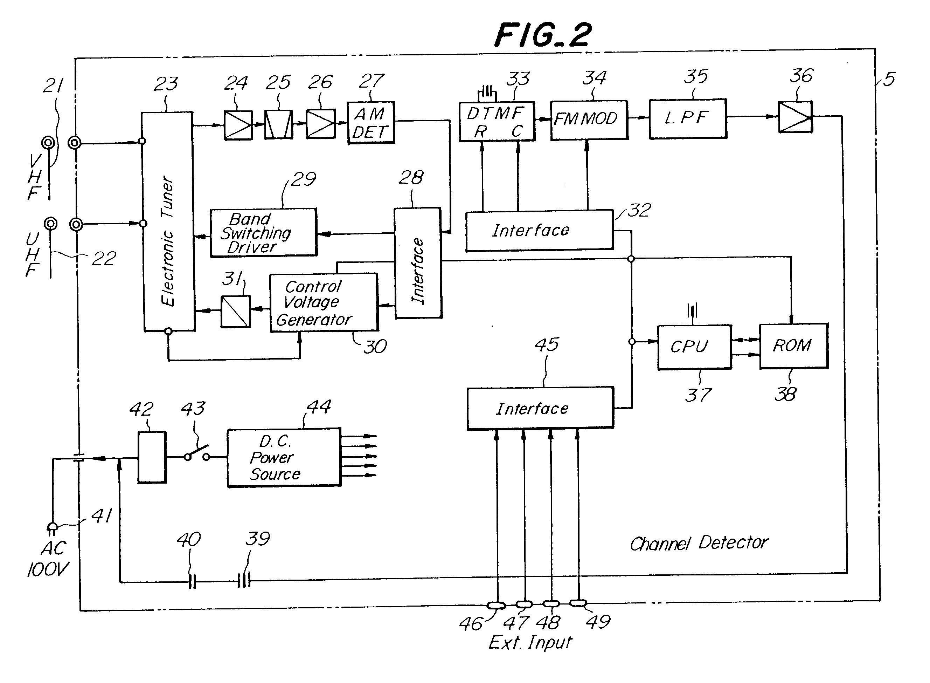

Fig. 2 is a block diagram showing a construction of the channel detector 3. The channel detector comprises VHF pickup antenna 21, UHF pickup antenna 22 and electronic tuner 23 to which electromagnetic wave generated from a local oscillator provided in a television receiver set is supplied. The electronic tuner 23 is scanned by a band switching driver 29, and high and low bands of VHF and respective bands of UHF are switched. Then, the channel being viewed is searched with the aid of a control voltage generator 30 via a low pass filter 31. The searching operation is controlled by a central processing unit (CPU) 37 through an interface 28. The channel being viewed is detected by picking up an electromagnetic wave leaked out of the local oscillator provided in the television receiver set. When the search frequency of the electronic tuner 23 is identical with the picked up frequency, the received signal is detected by intermediate frequency amplifier 24, band pass filter 25, intermediate frequency amplifier 26 and amplitude detector 27. The channel data is entered into the CPU 37 via the interface 28. The channel data thus detected is processed by CPU 37 and is sent to transmission data forming device 33 via an interface 32 and is converted into transmission data having a given format. The transmission data is further supplied to a frequency modulator 34 to effect the frequency modulation. The transmission data forming device 33 may be formed by any known device and in the present embodiment, it is constructed by dual tone multi frequency (DTMF) generator. This DTMF generator generates at a time two frequencies among eight frequencies. By suitably combining two frequencies it is possible to form a signal of four bits. The frequency modulator 34 may be also formed by any known frequency modulators. In this embodiment, the frequency modulator 34 includes a combination of voltage controlled multi vibrator, phase locked loop and low pass filter. To the frequency modulator 34, one frequency among eight frequencies is allotted as a carrier frequency. Therefore, it is possible to provide eight different channel detectors in the same panelist home terminal 1.

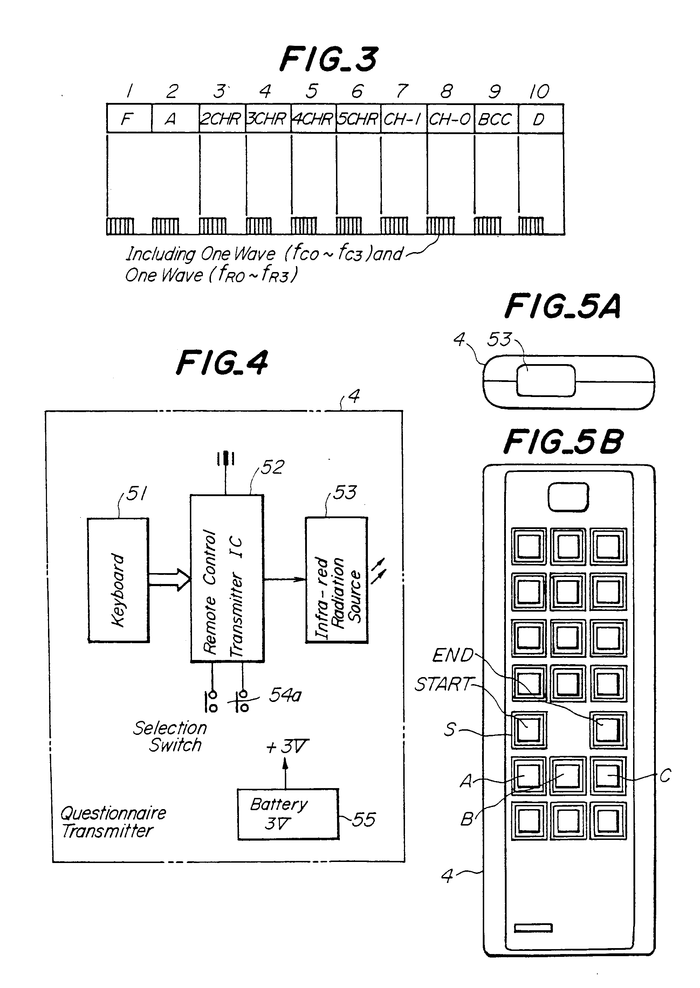

Fig. 3 illustrates an example of the format of the transmission data. The transmission data is consisting of ten characters. Four characters F, A, BCC and D are reserved for an auxiliary transmission and other six characters 0∼5 are used to transmit the detected channel data. Each character is consisting of four bits, so that it is possible to transmit sixteen data signals by respective characters. The transmission data may include, in addition to the channel data detected by the channel detector, other data which is entered from external inputs 46∼49 via an interface 45. The external entry data may be output signals from the questionnaire device, VTR, broadcasting signals received from satellites. To CPU 37 is connected a read only memory (ROM) 38 in which all the necessary programs and the carrier frequency allotted to the relevant channel detector are stored. As shown in Fig. 2, the output signal from the frequency modulator 34 is supplied to the domestic power supply line 6 via low pass filter 35, amplifier 36, transformer 39, capacitor 40 and power supply plug 41 and is further transmitted to the data processing device 8.

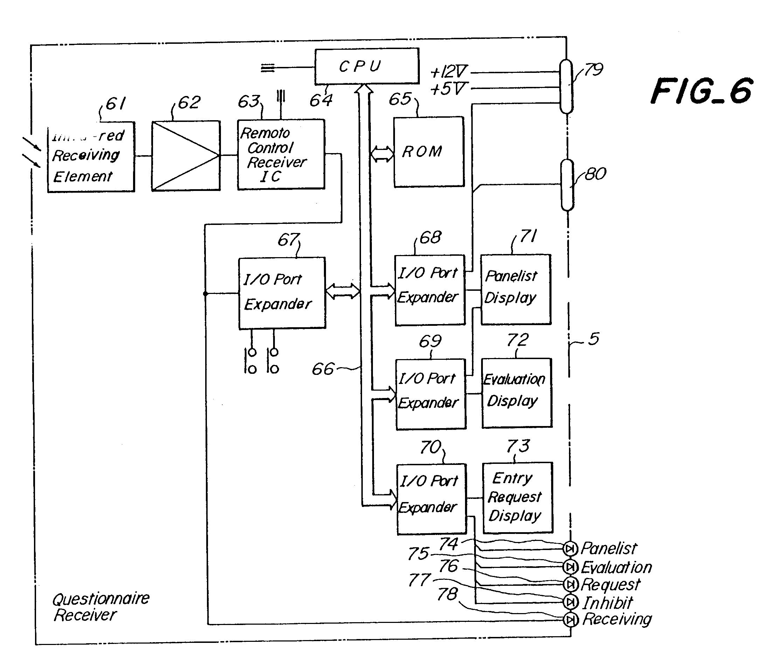

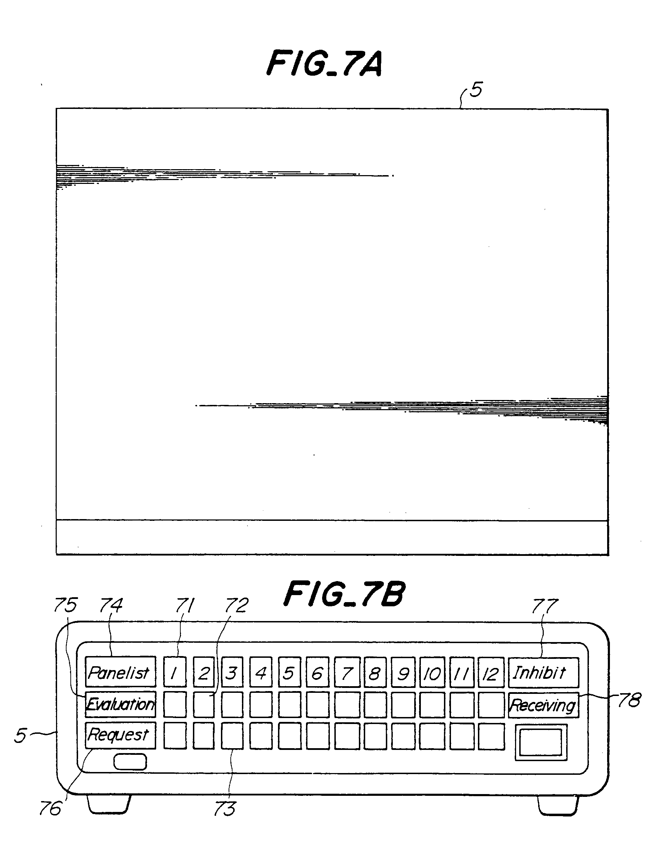

Figs. 4 and 5A, 5B are block diagram and front and plan views, respectively of the questionnaire transmitter 4, and Figs. 6 and 7A, 7B are block diagram and plan and front views, respectively of the questionnaire receiver 5. The questionnaire transmitter 4 has a similar construction to that of a remote control device using an infrared radiation source for use in domestic electric apparatuses. Data entered by a keyboard 51 is sent to a remote control transmitter IC 52 which actuates an infrared radiation source 53. The keyboard 51 is provided on a top surface of a housing and includes twelve push buttons. These push buttons are allocated to respective panelists in the relevant home, e.g. grandfather, grandmother, father, mother, and children. When a push button allocated to a person is pushed while the transmitter 4 is directed to the receiver 5, the infrared radiation emitted from the radiation source 53 is made incident upon an infrared radiation receiving element 61 provided in the receiver 5. The signal produced by the element 61 is amplified by an amplifier 62 and detected by a remote control receiver IC 63. Then the detected data is entered into a central processing unit (CPU) 64 via I/O port expander 67 and bus 66. Each of I/O port expanders 67, 68, 69 and 70 is constituted by an input/output interface with four bit input and four bit output. The receiver 5 comprises a display unit 71 for indicating respective panelists who are engaged with the data entry. The display unit 71 is lit when the relevant push button is pushed and subsequently a start button S is pushed. A display unit 72 is lit when the relevant panelist pushes one of three evaluation push buttons A, B and C. A is allocated to "Good", B "Normal" and C is defined to "Bad". Therefore, when the display unit 72 is lit on, it can be confirmed that the entry of the evaluation data has been completed. It should be noted that the content of the entered evaluation data is not displayed in order not to affect other panelists who are adjoining the data entry. Further, the evaluation data may be set in various ways. For instance, "YES" and "NO"; "AGREE" and "DISCHARGE"; "EXPENSIVE" and "CHEAP"; "LARGE" and "SMALL" may be allotted for predetermined push buttons. A display unit 73 is blinked when the evaluation data is not entered within a predetermined time period, so that it causes the panelist to enter the evaluation data. There are further provided light emitting diodes (LED) 74∼78, and LED 74, 75 and 76 display "PANELIST NAME", "EVALUATION" and "ENTRY REQUEST", respectively. LED 77 is used to display "ENTRY INHIBIT", 78 "UNDER RECEIVE" which represents that the receiver 4 is just receiving the data signal from the transmitter 5.

The receiver 5 further includes a ROM 65 for storing necessary programs. The CPU 65 has a timer installed therein and controlls all the other devices. The CPU 65 further comprises a memory for storing the received data signals temporarily. The data signal is transmitted from output terminals 79, 80 to the channel detector 3 via a cable. The receiver 5 further comprises input terminals 79 for receiving the power supply.

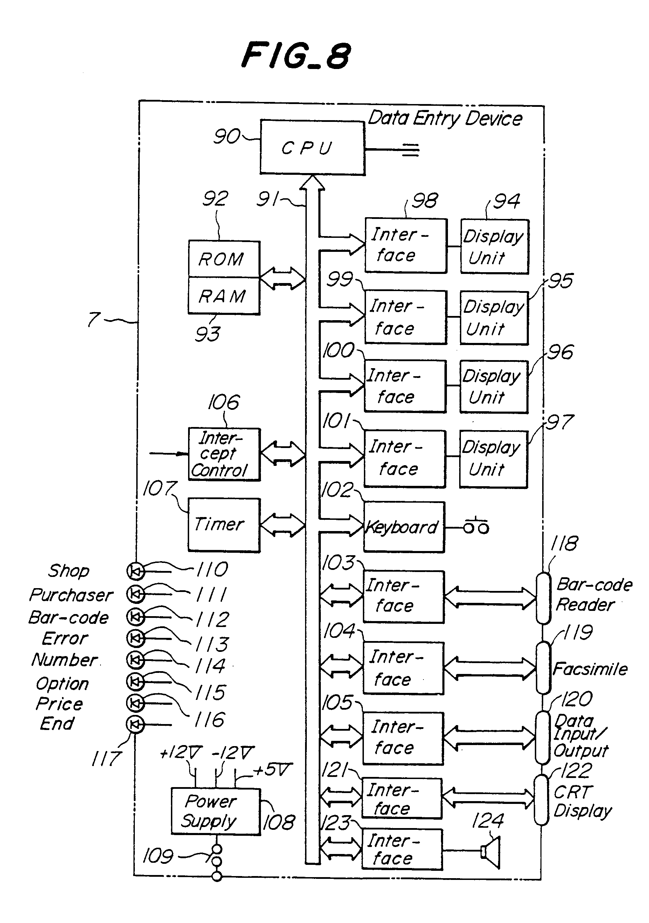

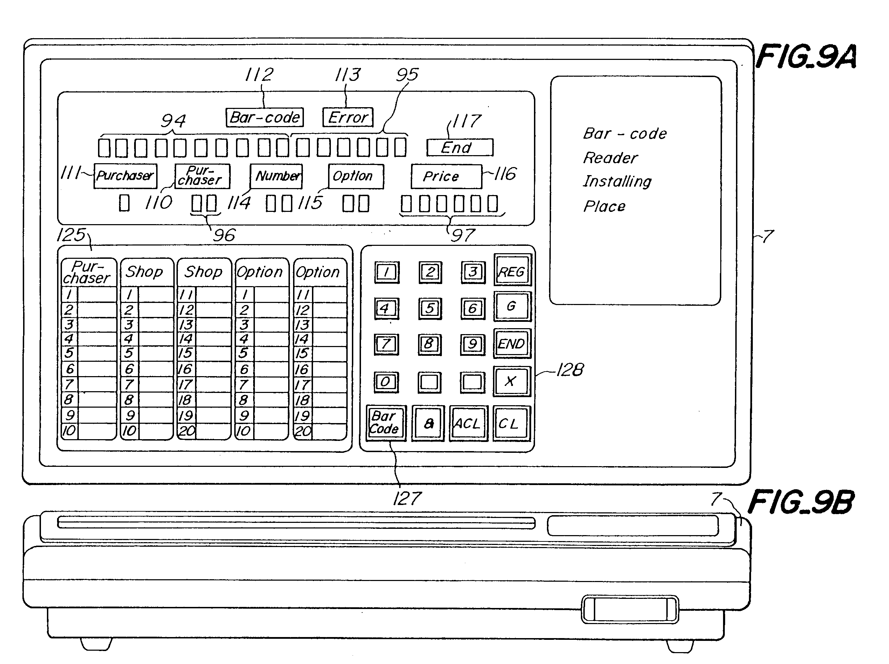

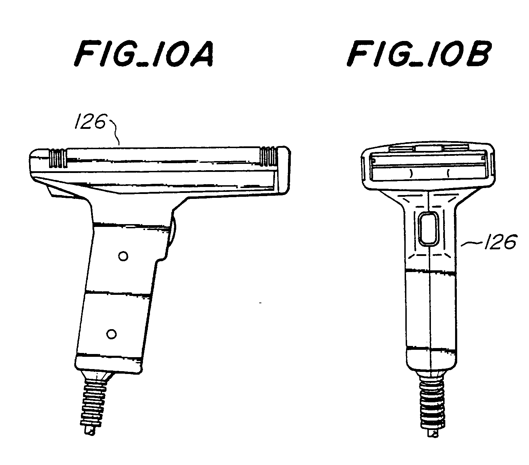

The market research data entry device 7 comprises the bar-code reader and keyboard. Fig. 8 is a block diagram of the market research data entry device 7, and Figs. 9A and 9B are plan and front views, respectively thereof and Figs. 10A and 10B are side and front views, respectively of the bar-code reader. The market research data may include objective data such as person's identification who bought products, date on which purchases were made, products which were bought, amounts by which the products were purchased, prices and shops from which the products were bought and subjective data such as whether the purchaser considers that the price is high or low, the purchaser is satisfied with the products, and the service at the shop is good or no. In the present embodiment, the data entry device 7 is constructed to enter the objective data except for the date. the remaining data may be entered as an option.

The bar-code reader 126 shown in Figs. 10A and 10B is the usual one. The data entered by the bar-code reader 126 is supplied through input terminal 118 and interface 103 to a random access memory (RAM) 93, and is then displayed on a display units 94, 95 via interfaces 98, 99. If the bar-code reader 126 could not read a bar-code provided on a product due to the fact that the bar code is stained, a bar-code button 127 on the keyboard 128 is pushed. Then, numbers provided besides the bar-code can be entered by operating ten keys. On usual foods and general goods there are provided bar-codes which identify manufactures and kinds of products. However, there are also products on which the bar-codes are not provided. Then identification codes have been previously determined for manufactures and kinds of products to be researched, and suitable identification codes may be entered by means of the ten keys in the keyboard 128. Data entered by the keyboard 128 is also displayed on display units 96, 97, via interfaces 100 an 101. After the data entry has been completed, when an "END" button on the keyboard 128 is pushed, the data stored in RAM 93 is supplied to the data processing device 8 via interface 105 and data input/output terminal 120. There are further provided control processing unit 90, bus 91 and read only memory (ROM) 92 in which necessary programs have been stored. A plurality of light emitting diodes 110 to 117 are provided for indicating shop, purchaser, bar-code, error, number, option, price and end, respectively. Given code numbers have been allocated to purchasers and shops and a master file showing the relation thereof is provided at the data center 10. At respective panelist homes, purchasers and shops can be registered by pushing ten keys corresponding to relevant numbers and then a registering button "REG" on the keyboard 128. The relation between the purchasers and shops and the registered numbers is written on a code table 125. The data entry is effected in the order of purchaser, shop, bar-code, option and price. If a price of a single product is known, the number of products is first entered by the ten keys, then a multiple button "X" on the keyboard 128 is pushed, and finally the registering button "REG" is pushed. Then a total price is calculated and entered. In this case, the total price is displayed on the display unit 97. When a plurality of different kinds of products are purchased and prices of respective products are not known, a bar-code on the same kind of products is first readout, and then the number of products is entered with the aid of the ten keys. Next, after pressing an accumulation button "&" on the keyboard 128, the same operation is continued for another kind of products. After the above mentioned operation has been completed for all the kinds of products, the known total price is entered by means of the ten keys.

The date of purchasing and various kinds of evaluation may be entered by utilizing one or more option buttons. Further, the evaluation data may be entered by operating a green button "G" which serves to change the function of buttons. For instance, the evaluation data may be entered by first depressing the green button "G" and then pushing ten keys "1" representing "YES", "2" denoting "NO"; "3" corresponding to "EXPENSIVE" and "4" representing "CHEAP". In this manner, the data entry device 7 can be used as a kind of an answer to question device.

Further, the facsimile device 15 is connected to a terminal 120 which is coupled with the CPU 90 via an interface 104, and the CRT display device 16 is connected to a terminal 122 which is coupled with the CPU 90 by means of an interface 121. The audio signal is supplied to a loudspeaker 124 via an interface 123. The messages sent from the data center are supplied to the data input/output terminal 120 by means of the data processing device 8 and are stored in RAM 93 via the interface. Then the necessary messages are supplied to the facsimile device 15, CRT display device 16 and loudspeaker 124 under the control of CPU 90.

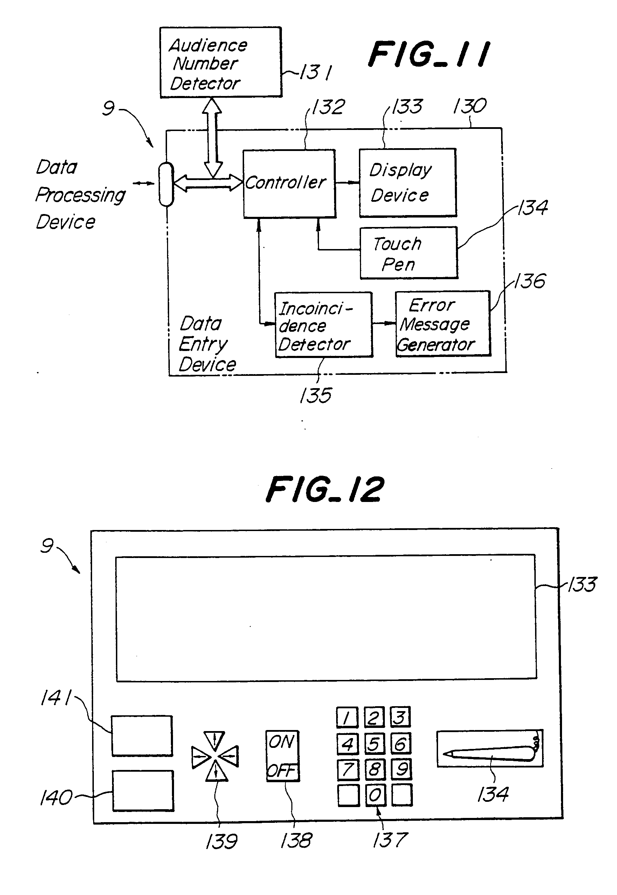

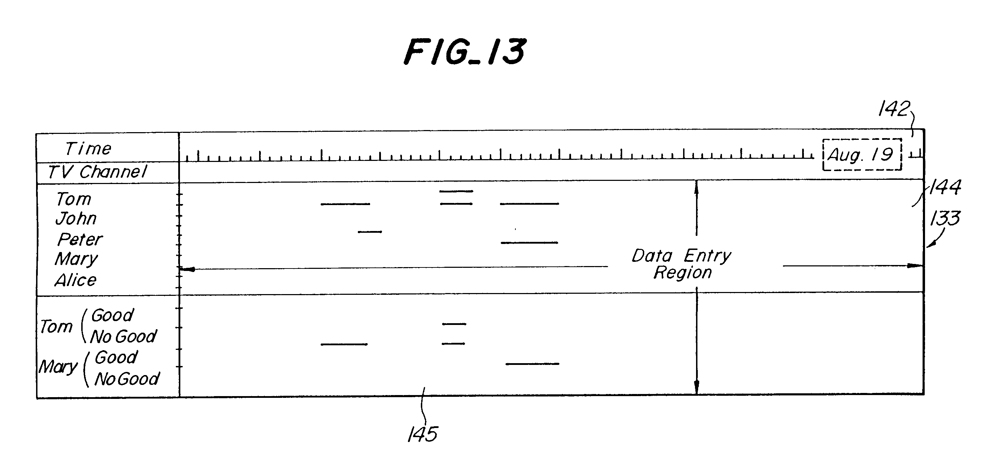

Fig. 11 is a block diagram showing the personal audience rating data entry device 9, Fig. 12 is a front view thereof, and Fig. 13 is a schematic view illustrating the display device thereof. This data entry device 9 receives time data and channel data from the data processing device 8 and supplies the personal audience rating data to the data processing device 8. The display screen is formed by a liquid crystal display (LCD) and displays in upper two columns 142 and 143 the time scale and television channels. In lower columns 144 and 145 there are written times during which respective panelists are watching the television and the evaluation of television programs with the aid of a touch pen 134. Upon writing the data, at first a write-in button 141 is pushed and then a desired portion on the display screen is pointed by the touch pen 134. If it is required to erase the entered data, an erasing button 140 "ERASE" is first pushed and a portion on the display screen to be erased is pointed by the touch pen 134. In order to entry respective panelists and evaluation, a cursor operator 139 is actuated to move a cursor into a desired position on the display screen, and then predetermined numbers are entered by using ten keys 137. For the sake of clarity, the panelists are denoted by names in Fig. 13.

The data entry device 9 further comprises an incoincidence detector 135 which detects any incoincidence in data such that the entered number of television receiver sets exceeds the number of actually installed television receiver sets and evaluation of a panelist who does not watch the television is entered. When the incoincidence is detected, the entry of such erroneous data is inhibited and at the same time an alarm such as a buzzer sound is generated by means of an error message generator 136. When it is not required to provide television watching times for respective panelists, the total number of panelists who are watching the television is detected by a detector 131. The detector 131 may detect the number of people in a room in which the television receiver set is installed by means of infrared or ultrasonic detector or pressure sensitive mat placed on a floor.

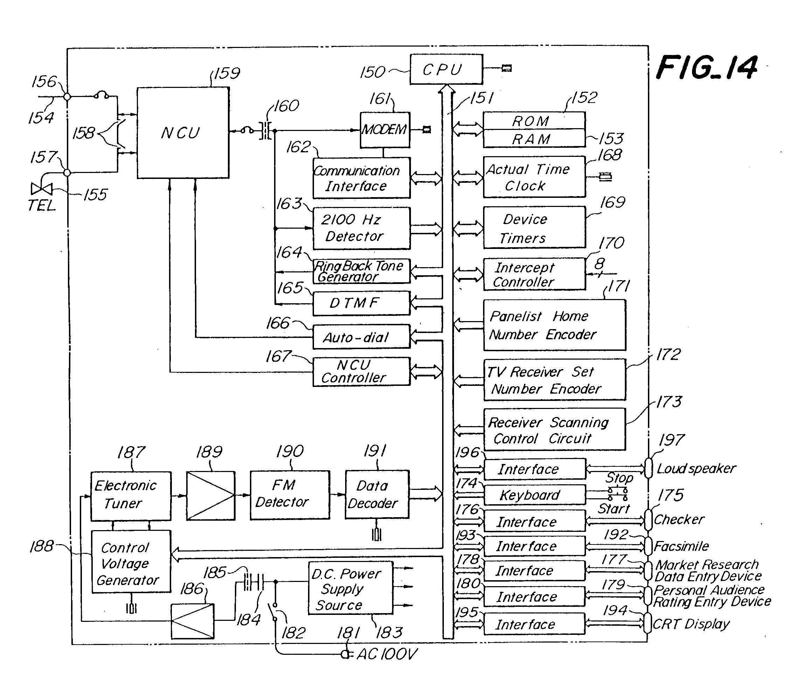

Fig. 14 is a block diagram illustrating the construction of the data processing device 8. The data processing device 8 has the function to receive the channel data and questionnaire data via the domestic power supply lines and the market research data and personal audience rating data via the cable, to store the received data and to transmit the stored data to the data center in response to the polling from the data center. In the present embodiment, in order to effect the two-way communication, use is made of a pattern transmission system and the message from the data center is recorded on a hard copy by means of the facsimile device 15 which is connected to a terminal 192 which is further coupled with a central processing unit 150 via a bus 151. If the so-called code-transmission system is utilized, it is sufficient to provide a simple printer instead of the facsimile device. The CRT display device 16 is connected to a terminal 194 which is coupled with CPU 150 via an interface 195 so that the message can be displayed on the display screen. The speech signal is supplied to a terminal 197 by means of an interface 196. The above mentioned operation of the data processing device 8 is controlled by CPU 150 and necessary programs therefor is stored in ROM 152. The received data is tored in RAM 153. The data from the market research data entry device 7 and the data from the personal audience rating data entry device 9 are received at terminals 177 and 179, respectively and are supplied to the common bus 151 via interfaces 178 and 179, respectively. The data from the channel detector 3 and the data from the questionnaire data entry device 4 are transmitted over the domestic power supply lines. Therefore, by inserting an AC plug 181 into a socket, the data signal is supplied through power switch 182, capacitor 184 and transformer 185 to an amplifier 186. Then the amplified data signal is supplied to an electronic timer 187 in which the carrier frequencies are scanned by a control voltage generator 188 under the control of CPU 150. The picked-up signal is first amplified by an amplifier 189 and then is detected by FM detector 190. The detected signal is supplied to a decoder 191 to reproduce the original data signal which is then supplied to CPU 150 via the common bus 151. In CPU 150, the received data signal is processed together with the data stored in ROM 152, the time data and data from encoders into given transmission data having a given format. The data thus produced is stored in RAM 153.

The data processing device 8 further comprises a real time clock 168 for generating a current time signal, and a set of timers 169 for respective devices. A home number encoder 171 generates a code number of the panelist home, a receiver number encoder 172 produces respective code numbers of television receiver sets provided in the panelist home, and a circuit 174 controls the scanning of the maximum eight television receiver sets. A keyboard 174 is provided for effecting manual start/stop, setting an access time from the data center, and for connecting the device to the telephone line. Since all the data is formed in an interruption mode, an interruption control circuit 170 is provided. Further, to a terminal 175 is connected a checker which checks the operation of the circuit via an interface 176.

The data format may be designed by considering various factors such as kinds and amounts of data, future extension, necessary transmission rate, transmission control and protection for power interruption and interference. In the present embodiment, there are provided sixteen codes (O∼F) each being composed of four bits (O∼F), and data and control items are allocated to respective codes. For instance, a fifth code is allocated to the channel data and questionnaire data transmitted over the domestic power supply lines.

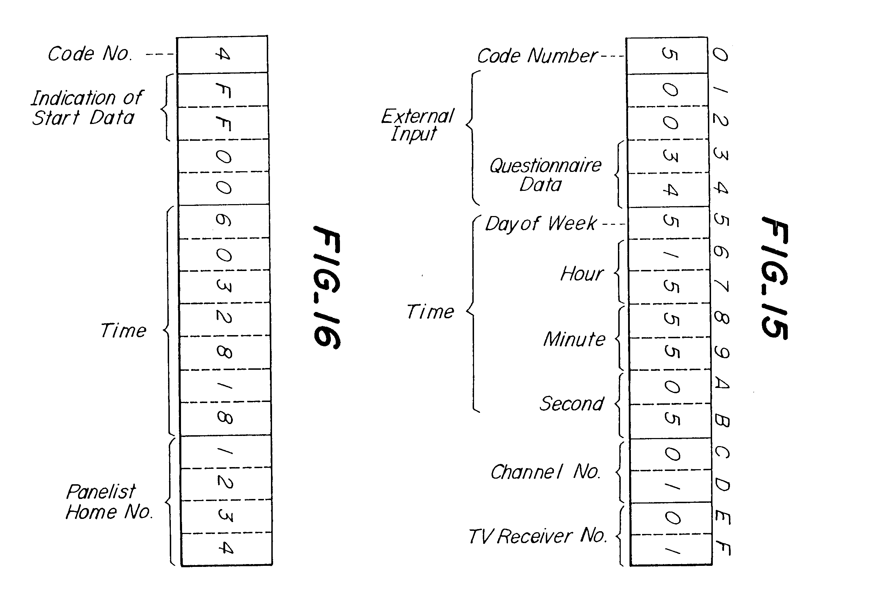

Fig. 15 shows an example of the data format, in which a first character O is allotted to the code number and characters 1∼4 are allocated to the external data which is received at the input terminals 46∼49 in Fig. 2. In this embodiment, only the questionnaire data is given as the external data, the contents of characters 1 and 2 are set to "O". Characters 5 to B are allocated to the time at which a relevant data is produced. In Fig. 15, the time codes represent Friday, 15 o'clock, 55 minutes and 5 seconds. The characters C and D are used to transmit the channel number, and the characters E and F are allocated to the television receiver set number. In Fig. 15, it is understood that the television receiver set No. 1 reproduces the channel No. 1. The remaining codes are also formed in a similar manner in accordance with the characteristics of the codes. These codes are produced every time new data or event occurs. For instance, a fifth code corresponding to the channel data is produced every time the channel is changed and the power switch of the television receiver set is switched on and off. A first code of power supply interruption is generated every time the power supply is interrupted. The data thus formed is transmitted to the data center at a predetermined time or at a desired time. In this case a first row of the data includes a code illustrated in Fig. 16. A code number "4" represents the start of the data collection, and the characters 1 and 2 are set to "F". Characters C∼F represent the panelist home number.

The facsimile message from the data center 10 to the panelist home 1 are transmitted in the usual manner. In case of using the code transmission system, the codes are transmitted in the above explained data transmission system as a text, and at the panelist home the transmitted codes are reconstructed into the messages under the control of CPU. The received pattern may be directly displayed on the CRT display device 16. The speech signal is transmitted in the form of the digital audio signal, and the demodulated speech signal may be reproduced by the loudspeaker 124.

The data processing device 8 utilizes the telephone line 154 together with a telephone set 155. The telephone set 155 and telephone line 154 are connected to a network control unit (NCU) 159 via switches 158 which are exclusively used for the text, and NCU 159 is controlled by an NCU control circuit 167. When a telephone call is received during the predetermined time, usually a midnight time, during which the data transmission is destined to be effected, it is checked whether the call is sent from the data center or a third party by detecting a signal of 2100 Hz transmitted from the data center. If the call is judged to be a normal call from a third party, a ring back tone generator 164 sends a ring back tone to the telephone line 154. At the same time, a bell or buzzer is rung. If a panelist hears the ringing sound, he or she changes the switch 158 manually and the telephone set 155 is connected to the telephone line 154. Then the panelist can talk with a person in a usual manner. When the call is detected to be sent from the data center, the data processing device 8 is accessed automatically and the data stored therein is transmitted to the data center via communication interface 162, MODEM 161 and NCU 159. It is also possible to transmit the data at a time situating outside the predetermined time. In this case, after confirming that the telephone set 155 is not used, and waiting for a prepose time, the data center is called by means of an auto-dial circuit 166 if the telephone set is dial type or DTMF 165 if the telephone set is a push button type. If the data center responds to the call, the data is transmitted to the data center.

As explained above in detail, the various kinds of data can be transmitted between the panelist homes and the data center with the aid of the two-way communication, and the various kinds of messages in the form of graphic characters and drawings can be sent from the data center to respective panelist homes. Therefore, the contents of questions can be clearly and easily understood by the panelists, so that the higher grade of survey can be carried out. Further, the manner of handling the devices and the manner of responding to the questions can be transmitted in the interactive manner. Therefore, the erroneous operation of devices and erroneous entry of data can be effectively avoided. Moreover, since the messages from the data center can be stored at the panelist home, the messages can be positively informed to the panelists, and a lot of survey data can be collected.

Further, according to the invention, by utilizing the function of the two-way communication various kinds of data such as domestic accounting data useful for the panelists can be transmitted from the data center to respective panelists. Such a service can provide a special merit that the cooperation of panelists can be easily obtained.

Further, according to the invention, commercial messages can be transmitted to respective panelists with the aid of the facsimile device provided in panelist homes, so that the effectiveness of the commercials can be increased. Moreover, when the survey about the transmitted commercial messages is carried out, the effect of commercials can be known promptly and accurately.

When both the market research data and the television audience rating data are collected, various kinds of useful data can be obtained. For instance, the effectiveness of commercials on the television can be attained very promptly substantially on the real time. Further, the evaluation of respective panelists on the commercials and television programs can be also obtained very promptly.

## Claims

1. An apparatus for detecting market research data from television viewers with the aid of a two way communication comprising at respective panelist homes
a first data entry means (7) for entering market research data about products purchased by panelists;
a second data entry means (4, 5) for entering questionnaire data including answers of panelists to questions;
a data processing means (8) for receiving the market research data and questionnaire data entered by said first and second data entry means, processing the received data into a transmission data having a predetermined format, storing the transmission data and transmitting the transmission data to a data center (10) over a telephone type link; and
a means (15, 16, 124) for receiving messages sent from the data center and outputting the messages;
and at the data center (10)
a means (11) for controlling said data processing means at the panelist homes and collecting the transmission data stored therein;
a means (12) for processing the transmission data collected from the panelist homes to derive marketing research data including market research data, effectiveness of commercials, and answers to questions; and
a means (17) for transmitting the messages to the panelist homes.

2. An apparatus according to claim 1, wherein said first data entry means (7) comprises a bar-code reader to reading out bar-codes provided on the products purchased by the panelists, a keyboard including ten keys for entering the number of products, prices of products and kinds of products, and display units for displaying numerals being entered.

3. An apparatus according to claim 2, wherein said first data entry means (7) further comprises means for identifying respective panelists in a panelist home.

4. An apparatus according to claim 1, wherein said second data entry means comprises a data transmitter (4) for transmitting answers to questions, and a data receiver (5) for receiving the answers to questions transmitted from the data transmitter and forming the questionnaire data.

5. An apparatus according to claim 4, wherein said data transmitter (4) comprises a keyboard for entering the answers to questions and an infrared radiation emitting device for emitting an infrared radiation modulated with the entered answers to questions, and said data receiver (5) comprises an infrared receiving element for receiving the infrared radiation transmitted from the infrared radiation emitting element.

6. An apparatus according to claim 1, wherein said means (15, 16, 124) for outputting the messages sent from the data center comprises a means (15) for forming hard copies, a display device (16) for displaying the messages and a loudspeaker (124) for reproducing a speech signal.

7. An apparatus according to claim 1, further comprising, at the panelist home, a channel detector (3) for detecting television channels being viewed to derive television channel data which is sent to said data processing means, and said data processing means comprises means for receiving the market research data, questionnaire data and television channel data and a means for forming transmission data composed of said three kinds of data.

8. An apparatus according to claim 7, further comprising at the panelist home, a third data entry means (9) for entering personal television audience rating data.

9. An apparatus according to claim 8, wherein said third data entry means (9) comprises a display device for displaying a chart in which times, television channels being viewed, identification of respective panelists can be displayed, a keyboard and a touch pen for entering data.

10. An apparatus according to claim 9, wherein said third data entry means (9) further comprises a means for entering evaluation data for television programs being viewed.

## Patentansprüche

1. Gerät zur Erfassung von Marketingforschungsdaten von Fernsehgerät-Benutzern mit Hilfe einer Zweirichtungs-Kommunikation, das im Hause der jeweiligen Teilnehmer
eine erste Dateneingabeeinrichtung (7) zum Eingehen von Marketingforschungsdaten über jeweilige, von den Teilnehmern gekaufte Produkte,
eine zweite Dateneingabeeinrichtung (4, 5) zum Eingehen von Fragedaten einschließlich von Antworten der Teilnehmer auf Fragen,
eine Datenverarbeitungseinrichtung (8), die zum Empfang der Marketingforschungsdaten und der über die erste und zweite Dateneingabeeinrichtung eingegebenen Fragedaten, zum Verarbeiten der empfangenen Daten zu Sendedaten mit vorbestimmtem Format, zum Speichern der Sendedaten und zum Senden der Sendedaten zu einer Datenzentrale (10) über ein Telephon-Koppelglied ausgelegt ist, und
eine Einrichtung (15, 16, 124) zum Empfangen von von der Datenzentrale gesendeten Nachrichten und zum Ausgeben der Nachrichten aufweist,
und in der Datenzentrale (10)
eine Einrichtung (11) zum Steuern der Datenverarbeitungseinrichtungen in den Teilnehmer-Häusern und zum Zusammentragen der dort gespeicherten Sendedaten,
eine Einrichtung (12) zum Verarbeiten der aus den Teilnehmer-Häusern zusammengetragenen Sendedaten für die Gewinnung von Marketingforschungsdaten einschließlich Marktforschungsdaten, Wirksamkeit von Werbemaßnahmen und Antworten auf Fragen, und
eine Einrichtung (17) zum Senden der Nachrichten an die Teilnehmer-Häuser umfaßt.

2. Gerät nach Anspruch 1, bei dem die erste Dateneingabeeinrichtung (7) einen Strichcodeleser zum Auslesen von auf den von den Teilnehmern gekauften Produkten vorhandenen Produkten, eine Tastatur mit Zehnertasten zur Eingabe der Anzahl der Produkte, der Produktpreise und der Produktarten, und Anzeigeeinheiten zur Anzeige der eingegebenen Zahlen aufweist.

3. Gerät nach Anspruch 2, bei dem die erste Dateneingabeeinrichtung (7) weiterhin eine Einrichtung zum Identifizieren der jeweiligen Teilnehmer in einem Teilnehmer-Haus umfaßt.

4. Gerät nach Anspruch 1, bei dem die zweite Dateneingabeeinrichtung einen Datensender (4) zum Senden von Antworten auf Fragen und einen Datenempfänger (5) zum Empfangen der Antworten auf Fragen, die vom Datensender übertragen werden und die Fragedaten bilden, umfaßt.

5. Gerät nach Anspruch 4, bei dem der Datensender (4) eine Tastatur zum Eingeben der Antworten auf Fragen und eine Infrarot-Sendeeinrichtung zum Aussenden einer mit den auf die Fragen eingegebenen Antworten modulierten Infrarotstrahlung aufweist, und bei dem der Datenempfänger (5) ein Infrarot-Empfangselement zum Empfangen der vom Infrarot-Sendeelement gesendeten Infrarotstrahlung umfaßt.

6. Gerät nach Anspruch 1, bei dem die Einrichtung (15, 16, 124) zum Ausgeben der von der Datenzentrale gesendeten Nachrichten eine Einrichtung (15) zum Erzeugen dauerhafter Kopien, eine Anzeigeeinrichtung (16) zum Anzeigen der Nachrichten und einen Lautsprecher (124) zum Reproduzieren eines Sprachsignals aufweist.

7. Gerät nach Anspruch 1, bei dem im Teilnehmer-Haus ein Kanal-Detektor (3) zum Erfassen von angeschauten Fernsehkanälen für die Bildung von Fernsehkanal-Daten, die zur Datenverarbeitungseinrichtung gesendet werden, vorhanden ist, und bei dem die Datenverarbeitungseinrichtung eine Einrichtung zum Empfangen der Marktforschungsdaten, der Fragedaten und der Fernsehkanal-Daten und eine Einrichtung zum Bilden von aus diesen drei Datenarten zusammengesetzten Sendedaten aufweist.

8. Gerät nach Anspruch 7, bei dem im Teilnehmer-Haus eine dritte Dateneingabeeinrichtung (9) zum Eingeben persönlicher Fernsehzuschauer-Beurteilungsdaten vorgesehen ist.

9. Gerät nach Anspruch 8, bei dem die dritte Dateneingabeeinrichtung (9) eine Anzeigeeinrichtung zum Anzeigen eines Plans, in dem Zeiten, angeschaute Fernsehkanäle, Identifikationen jeweiliger Teilnehmer anzeigbar sind, eine Tastatur und einen Berührungsstift zum Eingeben von Daten aufweist.

10. Gerät nach Anspruch 9, bei dem die dritte Dateneingabeeinrichtung (9) eine Einrichtung zum Eingeben von Bewertungsdaten für angeschaute Fernsehprogramme aufweist.

## Revendications

1. Un appareil pour détecter des données d'étude de marché issues de téléspectateurs, à l'aide d'une communication bidirectionnelle comprenant, aux foyers des panelistes :
des premiers moyens d'entrée de données (7) pour l'introduction de données d'étude de marché concernant des produits achetés par des panelistes ;
des seconds moyens d'entrée de données (4, 5) pour l'introduction de données de questionnaire, comprenant des réponses de panelistes à des questions ;
des moyens de traitement de données (8) destinés à recevoir les données d'étude de marché et les données de questionnaire qui sont introduites par les premiers et seconds moyens d'entrée de données, à traiter les données reçues pour produire des données d'émission ayant un format prédéterminé, à enregistrer les données d'émission et à émettre les données d'émission vers un centre de données (10) sur une liaison de type téléphonique ; et
des moyens (15, 16, 124) destinés à recevoir des messages qui sont émis par le centre de données, et à présenter les messages ;
et au centre de données (10) :
des moyens (11) destinés à commander les moyens de traitement de données aux foyers des panelistes et à collecter les données d'émission qui sont enregistrées dans les moyens de traitement de données ;
des moyens (12) pour traiter les données d'émission qui sont collectées à partir des foyers de panelistes, pour élaborer des données d'étude de mercatique comprenant des données d'étude de marché, l'efficacité de publicité, et des réponses à des questions ; et
des moyens (17) pour émettre les messages vers les foyers de panelistes.

2. Un appareil selon la revendication 1, dans lequel les premiers moyens d'entrée de données (7) comprennent un lecteur de codes-barres qui est destiné à lire des codes-barres qui se trouvent sur les produits achetés par les panelistes, un clavier comprenant dix touches pour l'introduction du nombre de produits, des prix de produits et des sortes de produits, et des unités de visualisation pour visualiser les nombres qui sont introduits.

3. Un appareil selon la revendication 2, dans lequel les premiers moyens d'entrée de données (7) comprennent en outre des moyens pour identifier des panelistes respectifs dans un foyer de panelistes.

4. Un appareil selon la revendication 1, dans lequel les seconds moyens d'entrée de données comprennent un émetteur de données (4) pour émettre des réponses à des questions, et un récepteur de données (5) pour recevoir les réponses à des questions qui sont émises par l'émetteur de données et qui forment les données de questionnaire.

5. Un appareil selon la revendication 4, dans lequel l'émetteur de données (4) comprend un clavier pour l'introduction des réponses à des questions, et un dispositif émetteur de rayonnement infrarouge pour l'émission d'un rayonnement infrarouge modulé avec les réponses qui sont introduites pour des questions, et le récepteur de données (5) comprend un élément récepteur infrarouge pour recevoir le rayonnement infrarouge qui est émis par l'élément émetteur de rayonnement infrarouge.

6. Un appareil selon la revendication 1, dans lequel les moyens (15, 16, 124) destinés à présenter les messages qui sont émis par le centre de données comprennent des moyens (15) pour former des tirages, un dispositif de visualisation (16) pour visualiser les messages et un haut-parleur (124) pour reproduire un signal de parole.

7. Un appareil selon la revendication 1, comprenant en outre, au foyer de panelistes, un détecteur de canaux (3) destiné à détecter des canaux de télévision qui sont observés, pour élaborer des données de canaux de télévision qui sont émises vers les moyens de traitement de données, et les moyens de traitement de données comprennent des moyens qui sont destinés à recevoir les données d'étude de marché, les données de questionnaire et les données de canaux de télévision, et des moyens qui sont destinés à former des données d'émission constituées par ces trois sortes de données.

8. Un appareil selon la revendication 7, comprenant en outre au foyer de panelistes, des troisièmes moyens d'entrée de données (9) pour introduire des données d'audience de télévision personnelles.

9. Un appareil selon la revendication 8, dans lequel les troisièmes moyens d'entrée de données (9) comprennent un dispositif de visualisation qui est destiné à visualiser un diagramme dans lequel on peut afficher des intervalles de temps, des canaux de télévision qui sont observés, et l'identification de panelistes respectifs, un clavier et un crayon tactile pour l'introduction de données.

10. Un appareil selon la revendication 9, dans lequel les troisièmes moyens d'entrée de données (9) comprennent en outre des moyens pour introduire des données d'évaluation pour des émissions de télévision qui sont observées.
